# EUROPEAN PATENT APPLICATION

(11) **EP 4 693 826 A1**
(43) Date of publication of application: **11.02.2026**
(21) Application number: 24779014.0
(22) Date of filing: 28.02.2024
(51) Int. Cl.: H02J 50/80, H02J 50/40, H02J 50/60

(54) **POWER TRANSMISSION DEVICE, POWER RECEPTION DEVICE, METHOD IMPLEMENTED BY POWER TRANSMISSION DEVICE, AND STORAGE MEDIUM**

(30) Priority: 31.03.2023 JP 2023057095; 29.08.2023 JP 2023138772
(71) Applicant: Canon Kabushiki Kaisha, Tokyo, 146-8501 (JP)
(72) Inventor: TAMURA, Ichiro, Tokyo 146-8501 (JP); HIRAMATSU, Tomoki, Tokyo 146-8501 (JP)
(74) Representative: Canon Europe Limited
(86) International application number: PCT/JP2024/007378
(87) International publication number: WO 2024/202875

(57) **Abstract**

A power transmission device (102) performs detection of an NFC tag (103), negotiates with a power reception device (101), and determines power information representing power that is negotiable in the negotiation with the power reception device (101) on the basis of predetermined information acquired from the NFC tag (103). The predetermined information acquired from the NFC tag (103), for example, includes information indicating whether or not the detected NFC tag (103) is a power transmission-allowed NFC tag.

## Description

### [Technical Field]

The present disclosure relates to a technology of wireless power transmission.

### [Background Art]

In recent years, there has been extensive technological development of wireless power transmission systems. The technology for wireless power transmission systems, for example, as disclosed in Patent Document 1, generally, are compliant with the standards (WPC standard) established by the standardization body Wireless Power Consortium (WPC) as a wireless charging standard. According to the WPC standard, power transmission/reception and control communication therefor are conducted using magnetic induction.

One type of wireless communication method is Near Field Communication (NFC). An NFC tag does not have a battery and is driven using the energy of electromagnetic waves transmitted by a communication counterpart during communication. In a case in which the above-described wireless power transmission is performed on an NFC tag, an antenna element and the like of the NFC tag may be damaged. In order to avoid such situations, the WPC standard stipulates that a power transmission device performs an NFC tag detecting process using communication based on standards relating to NFC (NFC standard) in parallel with processes relating to power transmission and reception. Then, in accordance with a result of the detection of an NFC tag, it is determined whether to stop or continue power transmission and reception.

### [Citation List]

### [Patent Document]

[Patent Document 1]
Japanese Patent Laid-Open No. 2015-56959

### [Summary of Invention]

### [Technical Problem]

In a case in which an NFC tag is detected by performing NFC tag detection, it is preferable to executes an appropriate process in addition to stopping power transmission and reception as described above.

Thus, the present disclosure provides a technology capable of performing an appropriate process in a case in which an NFC tag is detected.

### [Solution to Problem]

A power transmission device according to one form of the present disclosure includes: a detection means configured to perform detection of a Near Field Communication (NFC) tag; a negotiation means configured to negotiate with a power reception device; and a determination means configured to determine power information representing power that is negotiable on the basis of predetermined information acquired from the NFC tag.

### [Advantageous Effects of Invention]

According to the present disclosure, an appropriate process can be performed in a case in which an NFC tag is detected.

### [Brief Description of Drawings]

FIG. 1 is a diagram illustrating a configuration example of a wireless power transmission system according to an embodiment.
FIG. 2 is a block diagram illustrating a configuration example of a power reception device according to an embodiment.
FIG. 3 is a block diagram illustrating a configuration example of a power transmission device according to an embodiment.
FIG. 4 is a flowchart illustrating a process performed by a power transmission device.
FIG. 5 is a flowchart illustrating an NFC tag detecting process performed by a power transmission device.
FIG. 6 is a flowchart illustrating a transmittable power value determining process performed by a power transmission device in a first embodiment.
FIG. 7 is a sequence diagram illustrating processes performed by a power reception device and a power transmission device according to the first embodiment.
FIG. 8 is a flowchart representing a required power value determining process performed by a power reception device according to a second embodiment when a plurality of NFC tags are detected.
FIG. 9 is a sequence diagram illustrating processes performed by a power reception device and a power transmission device according to the second embodiment when a plurality of NFC tags are detected.

### [Description of Embodiments]

Hereinafter, embodiments of the present disclosure will be described in detail with reference to the attached drawings. It should be noted that not all of multiple features in the embodiments of the present disclosure are essential to the present disclosure, and the multiple features may be combined arbitrarily. In the drawings, the same reference numerals are assigned to identical or similar components, and redundant descriptions will be omitted.

### [First Embodiment]

### <Configuration of System>

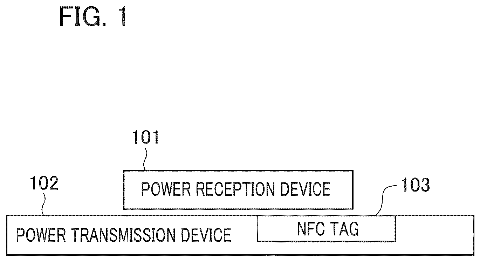

FIG. 1 is a diagram illustrating a configuration example of a wireless power transmission system according to an embodiment. This wireless power transmission system, in one example, is configured to include a power reception device 101 and a power transmission device 102. Hereinafter, for simplification of denotations, the power transmission device 102 may be referred to as a TX, and the power reception device 101 may be referred to as an RX.

The RX, for example, is an electronic device that receives power from the TX and charges an internal battery. In addition, the RX has a WPC function that is compliant with the Wireless Power Consortium (WPC) standard and further corresponds to a device authentication protocol of this standard. Furthermore, the RX is equipped with a Near Field Communication (NFC) function and, for example, operates in a card emulation mode using this function and is capable of electronic money payments and the like. In addition, the RX is equipped with an NFC function capable of reading an NFC tag 103 by performing NFC communication by operating in a reader/writer mode.

The TX, for example, is an electronic device that wirelessly transmits power to the RX that is placed on its own device. The TX wirelessly transmits power to the RX through a power transmission coil. In addition, the TX is equipped with an NFC function capable of reading an NFC tag 103 by performing NFC communication by operating in a reader/writer mode. By using this function, the TX can detect an NFC device and, for example, can stop or limit a power transmission process in order to protect the NFC tag 103. The NFC tag 103 is an example of a device that realizes near field communication by passively operating. As more specific examples, the NFC tag 103 represents an NFC/Radio frequency identifier (RFID) tag capable of performing NFC communication, an NFC communication device operating in a card emulation mode, and the like.

Generally, when a passive NFC tag is exposed to an electromagnetic field performing high-output-power transmission process, an antenna element of the NFC tag, a component implementing the NFC function, and the like are likely to be damaged. Meanwhile, there are power transmission devices into which NFC tags are built for the purpose of provision of additional information and UI display for enabling services, and these NFC tags are configured not to be easily damaged for power transmission of a predetermined output level or less. However, it is preferable for the TX to perform an appropriate process for power transmission other than the power transmission of a predetermined output level or less.

The NFC tag 103, for example, is built into the TX. In the case of an externally-attached device for the TX, the NFC tag 103 may be attached to the surface of the TX or may be arranged in the vicinity of the TX.

Hereinafter, although a smartphone as one example of the RX and a charger as one example of the TX are used for description, the present disclosure is not limited thereto. The RX and the TX may be configured to be built into another device (a camera, a smartphone, a tablet PC, a laptop, a vehicle, a robot, a medical device, or a printer) and to supply power to such a device.

The present system is assumed to perform wireless power transmission using an electromagnetic induction method for non-contact charging on the basis of the WPC standard. In other words, the RX and the TX perform wireless power transmission for non-contact charging based on the WPC standard between the power reception coil of the RX and the power transmission coil of the TX. The wireless power transmission method (non-contact power transmission method) is not limited to the method specified in the WPC standard and may be any other method such as another electromagnetic induction method, a magnetic resonance method, an electric field resonance method, a microwave method, or a method using laser and the like. In addition, in this embodiment, while wireless power transmission is assumed to be used for non-contact charging, the wireless power transmission may be performed for a use other than the non-contact charging.

In the WPC standard, the amount of power guaranteed to be received when the RX receives power from the TX is defined by a value called Guaranteed Load Power (hereinafter referred to as "GP"). GP, for example, represents a power value that is guaranteed to be output to the load of the RX such as a charging circuit or the like, that is, a load power value of the RX even if the power transfer efficiency between the power reception coil and the power transmission coil decreases due to a change in the positional relation between the RX and the TX. In addition, GP may be a load power level agreed upon through Negotiation between the TX and the RX. For example, in a case in which GP is 15 watts, even if the power transfer efficiency drops due to a change in the positional relation between the power reception coil and the power transmission coil, the TX performs power transmission by controlling such that 15 watts can be output to the load inside of the RX.

### <Configuration of Power Reception Device>

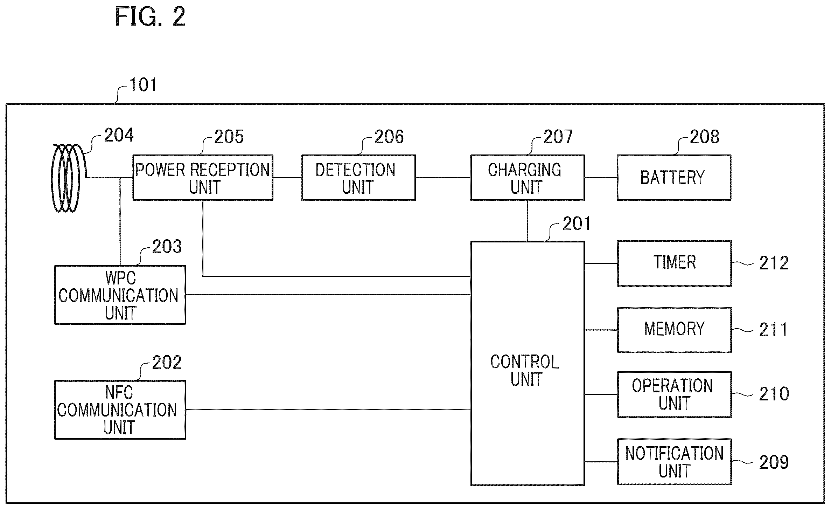

FIG. 2 illustrates an example of the configuration of the RX according to this embodiment. The RX is composed of a control unit 201, an NFC communication unit 202, a WPC communication unit 203, a power reception coil 204, a power reception unit 205, a detection unit 206, a charging unit 207, a battery 208, a notification unit 209, an operation unit 210, a memory 211, and a timer 212.

The control unit 201 controls the entire smartphone. The control unit 201, as an example, is configured using a central processing unit (CPU) or a microprocessor unit (MPU). In addition, the control unit 201 can measure a time using the timer 212. The control unit 201 performs control, for example, by executing a control program stored in the memory 211. The control unit 201, for example, is configured to include at least one or more processors such as a Central Processing Unit (CPU), a Micro Processing Unit (MPU), and the like.

In addition, the control unit 201 may be configured using dedicated hardware for a specific process such as an application specific integrated circuit (ASIC) or the like. Alternatively, the control unit 201 may be configured to include an array circuit such as a Field Programmable Gate Array (FPGA) complied to execute a predetermined process or the like. The control unit 201 causes the memory 211 to store information to be stored during execution of various processes.

In this embodiment, although the control unit 201 is represented as one constituent element, the configuration is not limited thereto. For example, a WPC control unit that controls a process relating to power reception with the power transmission device in the power reception device may be configured to be separated from the control unit 201. Alternatively, an NFC control unit that controls a process relating to NFC communication may be configured to be separated from the control unit 201. Alternatively, the WPC control unit and the NFC control unit may be configured to be separated from the control unit 201. In the case of a configuration in which the control unit 201 is separated into multiple units, the control units are connected to each other using a communication interface and can perform data communication. The communication interface, more specifically, may be any interface as long as it is an interface that realizes data communication such as an I2C, a GPIO, or the like.

The NFC communication unit 202 is a hardware module that realizes the NFC function. More specifically, the NFC communication unit 202 realizes a card emulation mode replacing the role as a non-contact IC card, a reader/writer mode used for reading the NFC tag 103, and a P2P mode in which a message is directly exchanged between NFCs. For example, by using the card emulation mode, electronic money payments and the like are enabled.

The WPC communication unit 203 performs wireless power transmission communication based on the WPC standard with the communication unit 306 of the TX. The WPC communication unit 203 obtains information transmitted from the TX by demodulating electromagnetic waves input from the power reception coil 204 and superimposes information to be transmitted to the TX into an electromagnetic waves by performing load modulation of the electromagnetic waves, thereby performing communication with the TX. In other words, the WPC communication unit 203 functions at least as a reception means receiving information.

The power reception unit 205 receives AC power (AC voltage and AC current) generated by electromagnetic induction based on electromagnetic waves emitted from the transmission coil of the TX through the power reception coil 204. The power reception unit 205 converts the AC power into DC power or AC power with a predetermined frequency and outputs the converted power to the detection unit 206. The power reception unit 205 functions as a power reception means.

The detection unit 206 detects that the RX is placed in the TX on the basis of the WPC standard. The detection unit 206, for example, detects at least one of a voltage value and a current value of the power reception coil 204 acquired when the power reception unit 205 receives a Digital Ping of the WPC standard through the power reception coil 204. For example, in a case in which the voltage value is below a predetermined voltage threshold value or in a case in which the current value exceeds a predetermined current threshold value, the detection unit 206 can judge that the RX is placed in the TX.

The charging unit 207 charges the battery 208 using power supplied from the power reception unit 205. In addition, the charging unit 207 starts or stops charging the battery 208 on the basis of control of the control unit 201 and further adjusts power used for charging the battery 208 on the basis of a charged state of the battery 208. When the power used by the charging unit 207 changes, the power supplied from the power reception unit 205, that is, received power of the RX also changes in accordance therewith. The charging unit 207 represented here is a load of the RX.

The battery 208 supplies power that is necessary for control of each unit of the RX according to the control unit 201, power reception, and communication to the entire RX. In addition, the battery 208 accumulates power received through the power reception coil 204.

The notification unit 209 notifies a user of information using an arbitrary technique such as a visual, auditory, or tactile technique. The notification unit 209, for example, notifies a user of the charged state of the RX and the state relating to power transmission of the wireless power transmission system including the RX and the TX as illustrated in FIG. 1. The notification unit 209, for example, is configured to include a liquid crystal display, an LED, a speaker, a vibration generating circuit, and other notification devices.

The operation unit 210 has a reception function for accepting an operation on the RX from a user. The operation unit 210, for example, is configured to include buttons and a keyboard, an audio input device such as a microphone, a motion detection device such as an acceleration sensor or a gyro sensor, or other input devices. **In** addition, a device acquired by integrating the notification unit 209 and the operation unit 210 such as a touch panel may be used.

The memory 211, as described above, stores various kinds of information such as identification information and device configuration information, a control program, and the like. **In** addition, the memory 211 may store information that is acquired by functional units other than the control unit 201.

The timer 212 performs time measurement using, for example, a count-up timer that measures an elapsed time from an activation time, a countdown timer that counts down from a set time, or the like.

### <Configuration of Power Transmission Device>

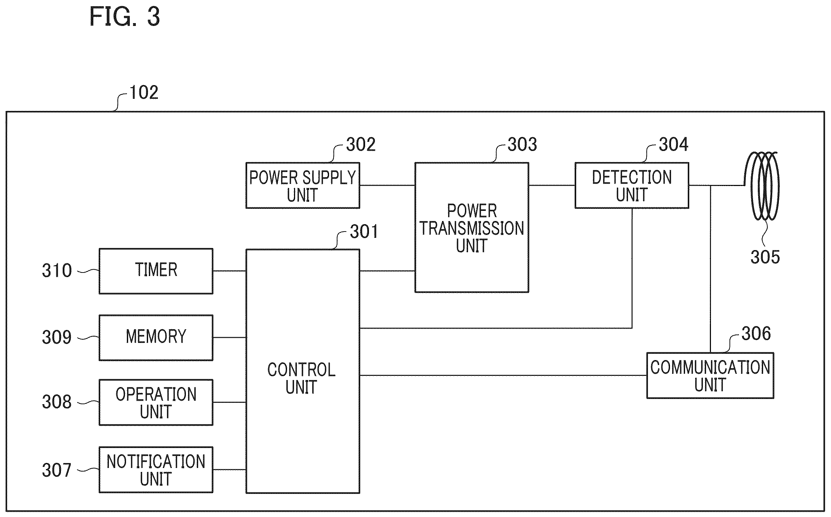

FIG. 3 illustrates an example of the configuration of the TX according to this embodiment. The TX is composed of a control unit 301, a power supply unit 302, a power transmission unit 303, a detection unit 304, a power transmission coil 305, a communication unit 306, a notification unit 307, an operation unit 308, a memory 309, and a timer 310.

The control unit 301 controls the entire TX, for example, by executing a control program stored in the memory 309. **In** other words, the control unit 301 controls each functional unit illustrated in FIG. 3. **In** addition, the control unit 301 performs control relating to power transmission control in the TX. Furthermore, the control unit 301 performs control relating to the NFC function in the TX. In addition, the control unit 301 may perform control for executing applications other than the wireless power transmission. The control unit 301, for example, is configured to include one or more processors such as a CPU and an MPU. The control unit 301 may be configured using one processor and, as described with reference to FIG. 2, a main control unit controlling the entirety and sub control units for controlling the power transmission process and the NFC communication may be realized using different processors.

The control unit 301 may be configured to include dedicated hardware for a specific process such as an application specific integrated circuit (ASIC) and an array circuit such as an FPGA complied to execute a predetermined process. The control unit 301 causes the memory 309 to store information to be stored during execution of various processes. In addition, the control unit 301 can measure a time using the timer 310.

The power supply unit 302 supplies power that is necessary for control of the TX using the control unit 301, power transmission, and communication for the entire TX. The power supply unit 302, for example, is a commercial power supply or a battery. Power supplied from a commercial power supply is accumulated in the battery.

The power transmission unit 303 converts DC or AC power input from the power supply unit 302 into AC frequency power with a frequency band used for wireless power transmission and inputs the AC frequency power to the power transmission coil 305, thereby generating electromagnetic waves used for causing the RX to receive power. The frequency of the AC power generated by the power transmission unit 303, for example, is about several hundreds of kHz (for example, 110 kHz to 205 kHz). The power transmission unit 303 inputs AC frequency power to the power transmission coil 305 on the basis of an instruction from the control unit 301 to cause the RX to output electromagnetic waves used for power transmission from the power transmission coil 305.

In addition, the power transmission unit 303 adjusts a voltage (power transmission voltage) or a current (power transmission current) input to the power transmission coil 305 or both thereof, thereby controlling the intensity of electromagnetic waves to be output. When the power transmission voltage or the power transmission current is increased, the intensity of the electromagnetic waves becomes stronger, and when the power transmission voltage or the power transmission current is decreased, the intensity of the electromagnetic waves becomes weaker. In addition, the power transmission unit 303 performs output control of the AC frequency power such that power transmission from the power transmission coil 305 starts or stops on the basis of an instruction from the control unit 301. Furthermore, the power transmission unit 303 notifies the control unit 301 of a current transmission power such that, for an arbitrary timing, the control unit 301 can acquire a transmission power at that timing. In addition, the measurement of a transmission power and the notification to the control unit 301 may be configured to be performed by a component other than the power transmission unit 303.

The detection unit 304 detects whether or not an object is placed in the TX on the basis of the WPC standard. More specifically, the detection unit 304 detects whether or not an object is placed on the Interface Surface of the TX. The detection unit 304, for example, detects at least one of a voltage value and a current value of the power transmission coil 305 at the time when the power transmission unit 303 transmits an Analog Ping of the WPC standard through the power transmission coil 305.

In addition, the detection unit 304 may detect a change in the impedance.
Then, in a case in which the voltage is below a predetermined voltage value or in a case in which the current value exceeds a predetermined current value, the detection unit 304 can judge that an object is placed in the TX. In addition, whether this object is the RX or any other foreign object is judged on the basis of presence/absence of a predetermined response to a Digital Ping that is continuously transmitted by the communication unit 306. In other words, in a case in which the TX receives the predetermined response, the object is judged to be the RX, and otherwise, the object is judged to be an object different from the RX.

The communication unit 306 performs control communication with the RX on the basis of the WPC standard as described above. The communication unit 306 modulates electromagnetic waves output from the power transmission coil 305 and transmits information to the RX to perform communication. In addition, the communication unit 306 demodulates the electromagnetic waves that have been output from the power transmission coil 305 and have been modulated by the RX to obtain the information that has been transmitted by the RX. In other words, the communication performed by the communication unit 306 is performed with being superimposed onto electromagnetic waves transmitted from the power transmission coil 305.

In addition, the communication unit 306 performs NFC communication and performs detection of the NFC tag 103 of the device that transmits power. In this case, the communication unit 306 functions as a detection means. In the communication unit 306, a module that performs control communication based on the WPC standard and a module that performs the NFC communication may be realized by one piece of hardware, or each module may be realized by different hardware.

The notification unit 307 notifies a user of information using an arbitrary technique such as a visual, auditory, or tactile technique. The notification unit 307, for example, notifies a user of information representing the charged state of the TX and the state relating to power transmission of the wireless power transmission system including the RX and the TX as illustrated in FIG. 1. The notification unit 307, for example, is configured to include a liquid crystal display, an LED, a speaker, a vibration generating circuit, and other notification devices.

The operation unit 308 has a reception function for accepting an operation on the TX from a user. The operation unit 308, for example, is configured to include buttons and a keyboard, an audio input device such as a microphone, a motion detection device such as an acceleration sensor or a gyro sensor, or other input devices. In addition, a device acquired by integrating the notification unit 307 and the operation unit 308 such as a touch panel may be used.

The memory 309 stores various kinds of information such as identification information and capability information, a control program, and the like. The capability information includes information representing whether high-accuracy foreign object detection processing capability is included. In addition, the memory 309 may store information that is acquired by functional units other than the control unit 301.

The timer 310 performs time measurement using, for example, a count-up timer that measures an elapsed time from an activation time, a countdown timer that counts down from a set time, or the like.

### <Process of Power Transmission Device>

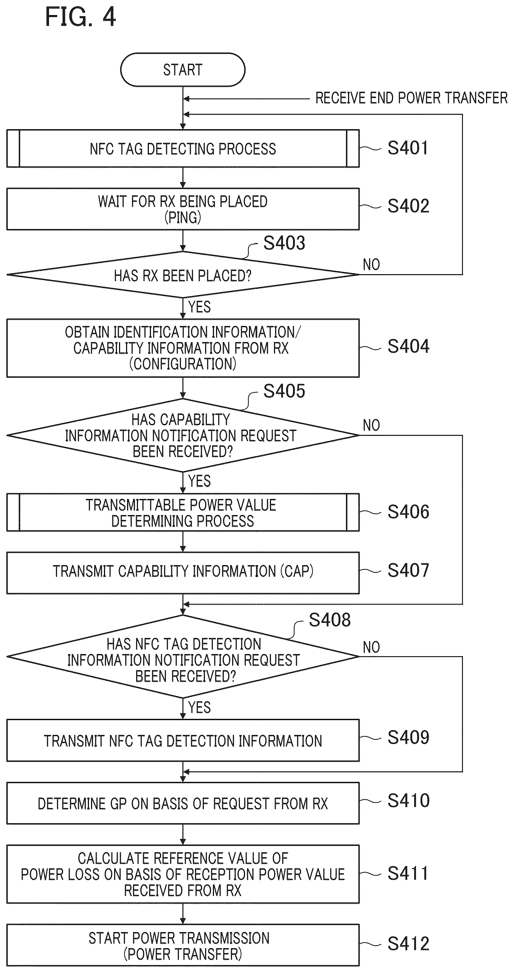

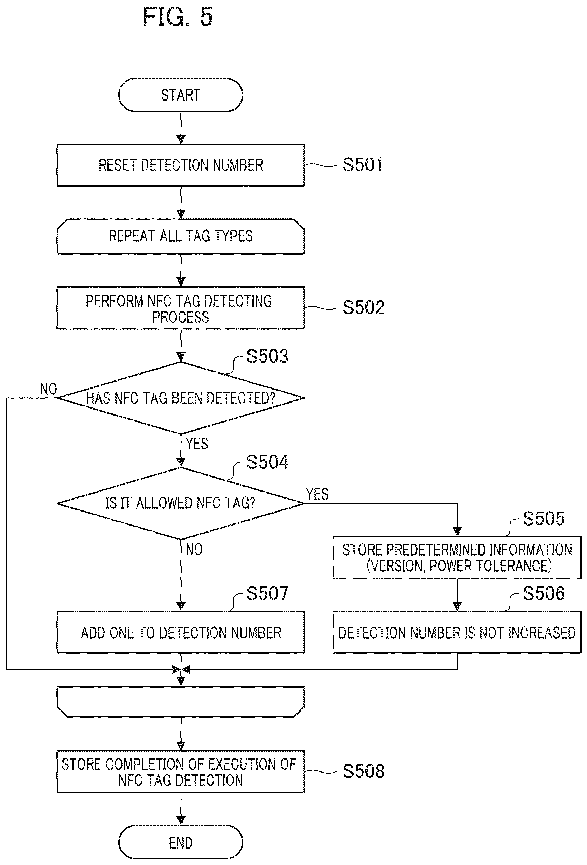

FIG. 4 is a flowchart illustrating an example of the flow of the process executed by the TX. This process is realized, for example, by the control unit 301 of the TX executing a program read from the memory 309. A part of the following process may be realized by hardware. The hardware of this case, for example, can be realized by automatically generating a dedicated circuit using a gate array circuit such as an FPGA from a program for realizing each process step using a predetermined compiler. This similarly applies also to the processes illustrated in FIGS. 5 to 7 to be described below.

This process can be executed in accordance with an on-operation of the power of the TX, an input of an instruction for starting a non-contact charging application from a user of the TX, the TX being connected to an external power supply (for example, a commercial power supply or an external battery) and receiving the supply of power, or the like.

The TX executes an NFC tag detecting process in S401. This process will be described below. Subsequently in S402, the TX executes a process defined as a Ping phase of the WPC standard and waits for an object being place on the TX. The TX, in the Ping phase, executes repetitive intermittent transmission of an Analog Ping of the WPC standard and executes a process of detecting an object present within a power transmittable range.

The TX judges whether or not a state in which the RX is placed is formed in S403. The judgment of S403 is performed on the basis of whether or not a predetermined response to a Digital Ping is present. In a case in which a response to the Digital Ping is present, it is judged that the detected object is the RX, and in that case, the TX judges that the RX is placed, and the process proceeds to the process of S404. In a case in which a response to the Digital Ping is absent, the TX judges that the detected object is not the RX, that is, the RX is not placed, and the process is returned to the process of S401.

In S404, the TX acquires identification information and capability information from the RX using communication of a Configuration phase defined in the WPC standard. The identification information of the RX includes a Manufacturer Code and a Basic Device ID. The capability information of the RX includes the following information.
- Information that can be used for identifying a version of the corresponding WPC standard
- A Maximum Power Value (or Reference Power) that is a value identifying a maximum power that can be supplied to the load by the RX
- Information representing whether or not a Negotiation function of the WPC standard is included

However, such information is an example, and the identification information and the capability information of the RX may be replaced with other information or may further include other information. For example, the identification information may be other arbitrary identification information that can be used for identifying an individual RX such as a Wireless Power ID or the like. In addition, the TX may obtain the identification information and the capability information using a method other than the communication of the Configuration phase of the WPC standard.

Next, the TX starts communication of a Negotiation phase of the WPC standard, and the process proceeds to the process of S405. In this case, mainly, the control unit 301 of the TX and the control unit 201 of the RX function as negotiation means. In S405, the TX judges whether or not a notification request for the capability information of the TX has been received from the RX. Here, the notification request for the capability information can be transmitted using a General Request (GRQ) data packet of the WPC standard. In a case in which the notification request for the capability information has been received (Yes in S405), the TX executes a transmittable power value determining process in S406. The transmittable power value determining process will be described below. The capability information may include a transmittable power value determined in S406. On the other hand, in a case in which the notification request for the capability information has not been received (No in S405), the TX causes the process to proceed to S408. Next, in S407, the TX transmits the capability information to the RX and causes the process to proceed to S408. The transmittable power value is a power that is allowed in the negotiation with the RX, in other words, it can be referred to also as a negotiable power value. In addition, the transmittable power value can be regarded as a maximum power for which the TX is willing to negotiate at a specific time point. In other words, the transmittable power value can be regarded as a maximum power for which the power transmission device can negotiate at a specific timing.

In S408, the TX judges whether or not a notification request for NFC tag detection information has been received from the RX. In a case in which the notification request for NFC tag detection information has been received (Yes in S408), the TX transmits the NFC tag detection information in S409. On the other hand, in a case in which the notification request for NFC tag detection information has not been received (No in S408), the TX causes the process to proceed to S410. The NFC tag detection information may include information such as whether the TX has an NFC tag detection function, whether NFC tag detection has been executed, whether an NFC tag has been detected, and the like. The NFC tag detection information may include other information relating to NFC tag detection or may include only a part of the information.

In S410, the TX determines the value of the GP on the basis of the request from the RX and causes the process to proceed to the process of S411. In S411, the TX calculates a reference value of power loss on the basis of the reception power value of the RX. The TX derives a relation of the power reception value with the transmission power value in a state having no foreign object. The TX derives data representing a power loss between the TX and the RX in a state having no foreign object using a predetermined reception power value acquired from the RX on the basis of the WPC standard. The predetermined reception power value is a reception power value in a Light Load state, a reception power value in a Connected Load state, and the like.

In the foreign object detecting process based on the power loss method, the amount of power loss between the TX and the RX during power transmission is calculated on the basis of the reception power value of the RX received during power transmission from the relation of the reception power value with a derived transmission power value. This amount of power loss is compared with a threshold value, and in a case in which it exceeds the threshold value, the TX judges that "a foreign object is present" or that "there is a high possibility of a foreign object being present".

Next, in S412, the TX starts power transmission toward the RX. The power transmission is performed using the process of a Power Transfer phase. The method is not limited thereto, and power transmission may be performed using a method other than that of the WPC standard. In a case in which an End Power Transfer data packet (hereinafter, referred to as an EPT packet) of the WPC standard is received from the RX, the TX ends the process in any process phase in compliance with the WPC standard. In addition, as a result of the NFC tag detecting process in the RX, in a case in which an NFC tag has been detected or also a case in which the battery is fully charged, the EPT packet is transmitted from the RX to the TX, and thus the initial state is returned.

In this embodiment, although the NFC tag detecting process of S401 is executed before the RX is placed in the TX, the configuration is not limited thereto, and the process may be executed at a timing after the RX is placed. In addition, in this embodiment, although the transmittable power value determining process of S406 is executed in a case in which a capability information notification request has been received from the RX, the configuration is not limited thereto. For example, the transmittable power value determining process may be executed after execution of the NFC tag detecting process of S401 or at an arbitrary timing in accordance with a change in the state of the TX.

Subsequently, an example of the flow of the NFC tag detecting process performed in S401 by the TX is described with reference to FIG. 5.

In S501, the TX resets (sets to zero) the detection number (the number of detections) of NFC tags. Thereafter, the TX repeatedly executes the processes of S502 to S507 for each tag type. The repetition process can be executed in order of Type-A/Type-B/Type-F. However, the order is not limited thereto, and this repetition process may be executed in an order different from the order of S502 to S507 for at least one tag type.

In S502, the TX executes an NFC tag detecting process. Here, the NFC tag detection can be performed using the reader/writer function that is compliant with the NFC standard. Subsequently, in S503, the TX judges whether or not an NFC tag has been detected. Here, the judgment on whether or not an NFC tag has been detected can be performed on the basis of whether or not predetermined communication with an NFC tag has been performed using the reader/writer function, and whether or not data (information) stored in the NFC tag has been able to be read. The data stored in the NFC tag may be data that is recorded in an NFC Data Exchange Format (NDEF) defined in the NFC standard. The data stored in the NFC tag may be data having a format that can be recognized by the TX such as Raw data or the like and is not limited thereto.

In a case in which it is judged that an NFC tag has been detected (Yes in S503), the TX causes the process to proceed to S504. On the other hand, in a case in which it is judged that no NFC tag has been detected (No in S503), the TX ends the repeat process relating to this tag type. In S504, the TX judges whether or not the detected NFC tag is a power transmission-allowed NFC tag. Whether or not the NFC tag is a power transmission-allowed NFC tag can be judged on the basis of whether or not information representing a power transmission-allowed NFC tag is included as predetermined information included in data read from the NFC tag. The form of the information representing the power transmission-allowed NFC tag may be a value or a character string, but it is not limited thereto.

In a case in which it is judged that the detected NFC tag is a power transmission-allowed NFC tag (Yes in S504), the TX causes the process to proceed to S505. On the other hand, in a case in which it is judged that the detected NFC tag is not a power transmission-allowed NFC tag (No in S504), the TX causes the process to proceed to S507. In S505, the TX stores the above-described predetermined information included in the data of the power transmission-allowed NFC tag and causes the process to proceed to S506.

Here, the predetermined information, mainly, may be a power value that is allowed in power transmission (hereinafter, referred to as an power tolerance) by this NFC tag. The power value allowed in power transmission may be a power value representing Tolerance of this NFC tag relating to a transmission power of the TX and a reception power of the RX. Alternatively, it may be a power value that can be endured by this NFC tag. More specifically, the power value representing the Tolerance of an NFC tag may be a Negotiable Load Power to be described below or a power value corresponding to a requested power value of Guaranteed Load Power that is requested by the RX in negotiation. The information representing an power tolerance includes a meaning indicating that this NFC tag is a power transmission-allowed NFC tag. In other words, a meaning indicating that this NFC tag is an NFC tag for which power transmission is allowed by the TX is included.

In addition, examples of the predetermined information include not only the power tolerance but also the version of the Qi standard under the WPC standard, information representing which NFC version this NFC tag corresponds, the version of the protection function, and the like. The information representing which NFC version this NFC tag corresponds, for example, is the version of the NFC-related standards established by the NFC Forum, which is the standardization body for the NFC, information of Type-A/B/F, and the like.

In this NFC tag detecting process, the control unit 301 and the communication unit 306 functions also as a counting means that counts the number of NFC tags. In S506, the TX does not add the number of detected NFC tags, in other words, sets a count value such that power transmission-allowed NFC tags are not counted in the number of detections and ends the repeat process relating to this tag type. In S507, the TX adds one to the number of detected tags and ends the repeat process relating to this tag type. When the repeat process relating to all the tag types ends, in S508, the TX stores information representing a state in which execution of the NFC tag detecting process is completed and ends the NFC tag detecting process.

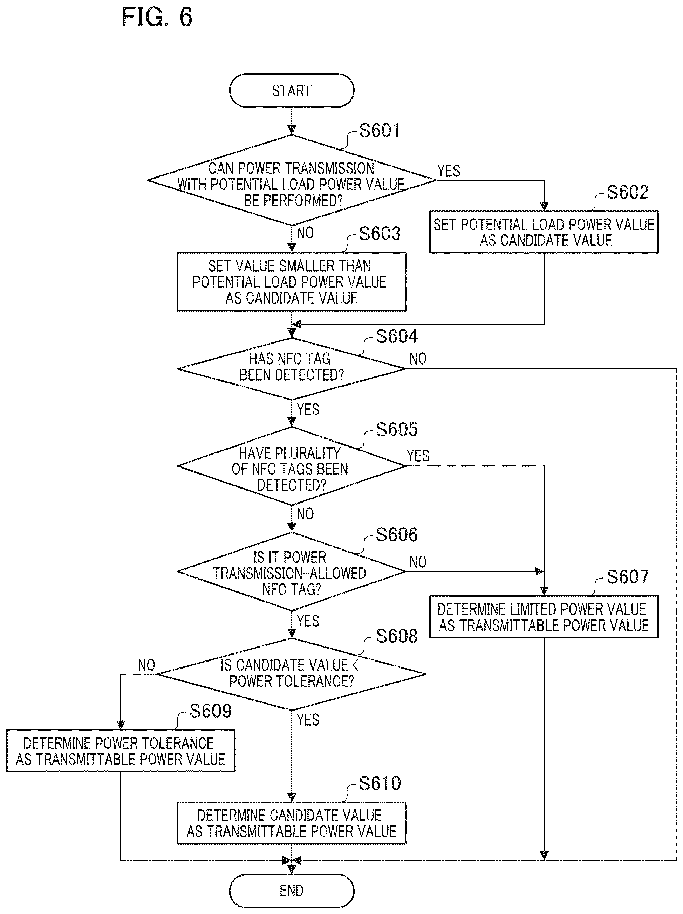

Subsequently, an example of the flow of the transmittable power value determining process executed in S406 by the TX is described with reference to FIG. 6. In this process, mainly the control unit 301 functions as a determination means that determines a transmittable power value. The transmittable power value is power information transmitted to the RX in negotiation performed with the RX in the Negotiation phase.

In S601, the TX judges whether or not power transmission can be performed with a potential load power value at this time point. Here, the potential load power value is a maximum power value that can be transmitted in power as the capability maintained by the TX and may be a Potential Load Power of the WPC standard. Whether or not power transmission with a potential load power value can be performed can be judged on the basis of whether or not there is a possibility of the operating temperature being higher than a predetermined threshold value in a case in which power transmission is continued with the potential load power value and whether or not power transmission of the potential load power value can be executed using power source supply at this time point. However, the judgment is not limited thereto, and it may be judged on the basis of other states and the like of its own device of the TX. In a case in which it is judged that power transmission with the potential load power value can be performed (Yes in S601), the TX causes the process to proceed to S602. On the other hand, in a case in which it is judged that power transmission with the potential load power value cannot be performed (No in S601), the TX causes the process to proceed to S603.

In S602, the TX determines the potential load power value as a candidate value for the transmittable power value and causes the process to proceed to the process of S604. In S603, the TX determines a value smaller than the potential load power value, that is, a maximum power value that can be transmitted in power at this time point as a candidate value for the transmittable power value and causes the process to proceed to S604. In S604, the TX judges whether or not an NFC tag has been detected in the NFC tag detecting process of S401. In a case in which an NFC tag has been detected (Yes in S604), the TX causes the process to proceed to S605. On the other hand, in a case in which no NFC tag has been detected (No in S604), the TX determines that candidate value set at the current time point as the transmittable power value and ends the transmittable power value determining process.

In S605, the TX judges whether or not a plurality of NFC tags have been detected in the NFC tag detecting process of S401. In a case in which a plurality of NFC tags have been detected (Yes in S605), the TX causes the process to proceed to S607. On the other hand, in a case in which a plurality of NFC tags have not been detected, in other words, in a case in which the number of NFC tags that have been detected is one (No S605), the TX causes the process to proceed to S606. In S606, the TX judges whether or not the detected NFC tag is a power transmission-allowed NFC tag. In a case in which the detected NFC tag is a power transmission-allowed NFC tag (Yes in S606), the TX causes the process to proceed to S608. On the other hand, in a case in which the detected NFC tag is not a power transmission-allowed NFC tag (No in S606), the TX causes the process to proceed to S607.

In S607, the TX determines a limited power value as the transmittable power value and ends the transmittable power value determining process. The limited power value is a sufficiently small value equal to or less than a predetermined value with which even if the power transmission process is continued, the possibility of occurrence of destruction, heat generation, and the like of the NFC tag is low and, for example, may be equal to or less than 5 watts, but it is not limited thereto.

In S608, the TX judges whether or not the above-described candidate value of the transmittable power value is a value less than the power tolerance. In a case in which the candidate value of the transmittable power value is a value less than the power tolerance (Yes in S608), the TX causes the process to proceed to the process of S610. On the other hand, in a case in which the transmittable power value is a value equal to or larger than the power tolerance (No in S608), the TX causes the process to proceed to the process of S609. In S609, the TX determines the power tolerance as the transmittable power value and ends the transmittable power value determining process. In S610, the TX determines the candidate value as the transmittable power value and ends the transmittable power value determining process.

### <Process of Entire System>

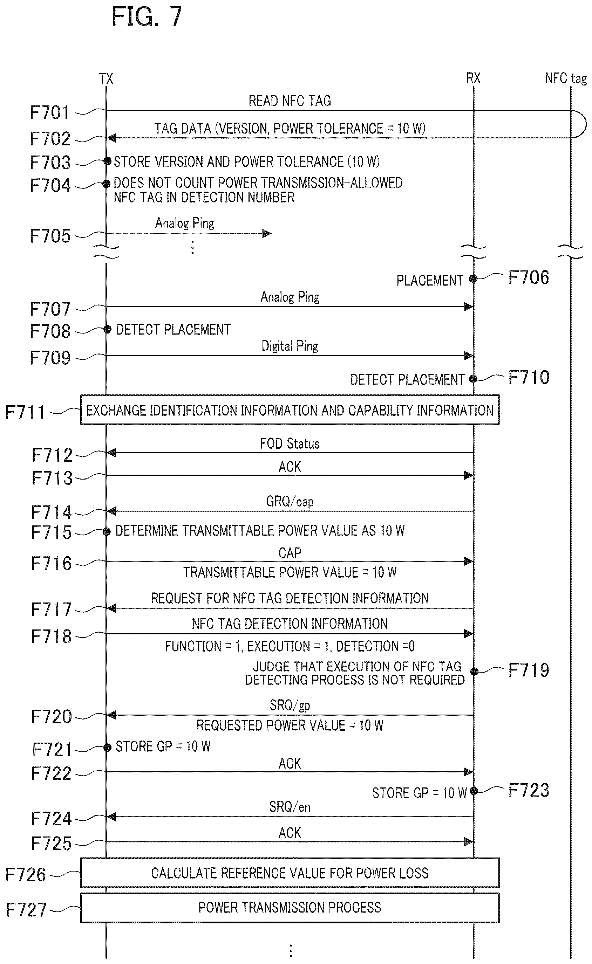

Next, an operation sequence of a case in which the TX and the RX according to this embodiment execute the processes described above is described with reference to FIG. 7. An initial state is assumed to be a state in which the RX is not placed in the TX. In addition, a power transmission-allowed NFC tag is assumed to be attached to the TX, and the TX and the placed RX is assumed to be able to read data of this NFC tag. In this embodiment, the power tolerance = 10 watts, the potential load power value = 15 watts, and the TX is assumed to be in the state being capable of performing power transmission with the potential load power value in description.

The TX transmits an Analog Ping from the power transmission coil 305 and waits for placement of the RX and executes the NFC tag detecting process. At this time, although the TX detects the attached NFC tag, the detected NFC tag is a power transmission-allowed NFC tag and thus is not counted in the number of detections. Subsequently, when the placement of the RX is detected, the TX exchanges the identification information and the capability information and then starts communication of the Negotiation phase. When the capability information notification request is received from the RX, the power tolerance is smaller than the potential load power value of the TX, and thus the TX stores the power tolerance as transmittable power value of the capability information and transmits the capability information to the RX. In addition, when an NFC tag detection information notification request is received from the RX, the TX stores information representing "The NFC tag detecting function is included, the execution of NFC tag detection is completed, and there is no detection of the NFC tag (= the number of detections is zero)" in the NFC tag detection information and transmits the NFC tag detection information to the RX. Since the execution of the NFC tag detection is completed in the TX, and there is no detected NFC tag, the RX that has received this NFC tag detection information judges that the NFC tag detecting process is not required in its own RX and continues the communication of the Negotiation phase.

When the NFC tag detecting process starts (S401), the TX, first, resets the number of detections (S501). In F701, the TX executes an NFC tag detecting process, that is, reading of an NFC tag (S502) and obtains predetermined data indicating a power transmission-allowed NFC tag from the NFC tag in F702 (Yes in S503, and Yes in S504). In F703, the TX mainly stores an power tolerance as predetermined information included in this data (S505). Alternatively, predetermined information stored by the TX may be at least one of the power tolerance, the version of the Qi standard of the WPC standard, information representing an NFC version to which this NFC tag corresponds, and the version of the protection function.

Next, in F704, although an NFC tag is detected, due to this NFC tag being allowed for power transmission, the TX does not count it in the number of detections (S506), stores information indicating a state in which execution of the detection of an NFC tag is completed (S508), and ends the NFC tag detecting process. Subsequently, in F705, the TX starts transmission of an Analog Ping and waits for an object being placed (S402). In F706, the RX is placed in the TX, and a change in the Analog Ping occurs in F707. In accordance with this, the TX detects that an object is placed on the power transmission coil in F708.

Next, the TX transmits a Digital Ping in F709, and the RX detects that its own device is placed in the TX in F710. On the other hand, in accordance with a response to the Digital Ping, the TX detects the placed object is the RX (Yes in S403).
Subsequently, by using communication of the Configuration phase, the TX acquires the identification information and the capability information in F711 from the RX (S404).

Subsequently, the TX and the RX start communication of the Negotiation phase of the WPC standard, and the RX transmits an FOD Status data packet of the WPC standard to the TX in F712. When the FOD Status data packet is received, the TX transmits ACK in F713 due to no presence of a foreign object in this embodiment. Subsequently, the RX transmits a capability information (CAP) notification request to the TX using a General Request (GRQ) data packet of the WPC standard in F714. When a capability information notification request is received (Yes in S405), the TX executes a transmittable power value determining process (S406).

In F715, in this embodiment, as described above, the TX can perform power transmission with a potential load power value (Yes in S601, S602). However, the detected NFC tag is only the NFC tag for which power transmission is allowed (Yes in S604, No in S605, and Yes in S606), and the power tolerance (= 10 watts) < the potential load power value (= 15 watts) (No in S608). For this reason, the TX determines the power tolerance as the transmittable power value (S609).

Subsequently in F716, the TX transmits a CAP data packet of the WPC standard to the RX (S407). In addition, a transmittable power value, that is, a Negotiable Load Power may be included in the CAP data packet.

Next, in F717, the RX transmits an NFC tag detection information notification request to the TX using a GRQ data packet of the WPC standard. When the NFC tag detection information notification request is received (Yes in S408), the TX transmits NFC tag detection information to the RX in F718 (S409). In addition, the NFC tag detection information can be transmitted using a data packet defined in the WPC standard. In this embodiment, since the TX has the NFC tag detection function, a state in which execution of the NFC tag detecting process has been completed is formed, and the number of detections of NFC tags is zero, data representing these details can be transmitted as the NFC tag detection information. In this case, although the data may be values "Function = 1, Execution = 1, and Detection = 0", it may be identifiable data such as bit denotations or a character string, and the data denotation method may be different in accordance with information.

When the NFC tag detection information is received, as a result of the TX executing the NFC tag detection in F719, there is no detected NFC tag, and thus the RX judges that execution of the NFC tag detecting process in the RX is not required and continues the process of the Negotiation phase.

Next, in F720, the RX stores the requested power value of the GP in a Specific Request (SRQ) data packet of the WPC standard and transmits the Specific Request data packet to the TX. In this embodiment, the requested power value of the GP is described as the same power value as the transmittable power value included in the capability information transmitted to the RX in F716, that is, the power tolerance. When an SRQ data packet that is a GP request is received, due to the requested power value is a value (the same value) that is equal to or less than its own transmittable power value, the TX accepts the requested power value and stores it as the value of the GP in F721 (S410). Subsequently, the TX transmits ACK that is a response of approval to the RX in F722. When the ACK is received, the requested power value transmitted in F720 is accepted, and thus the RX stores this requested power value as the value of the GP in F723.

Next, in F724, the RX transmits a Negotiation phase end notification to the TX in an SRQ data packet of the WPC standard. When the Negotiation phase end notification is received, the TX transmits ACK that is a response of approval to the RX in F725. Thereafter, the RX and the TX perform calculation of a reference value of power loss for the purpose of detection of a foreign object on the basis of the determined value of the GP (F726, S411) and start power transmission/reception process (F727, S412).

According to the operation described above, in a case in which a power transmission-allowed NFC tag is detected, the TX according to this embodiment gives a notification of a smallest value of the potential load power value of the TX, the transmittable power value at this time point, and a power value that can be allowed by the detected NFC tag as a transmittable power value of the capability information. In accordance with this, power transmission/reception can be continued while suppressing destruction and heat generation of the NFC tag, and thus a safer wireless power transmission system having higher efficiency can be realized. In other words, the power transmission device according to this embodiment can perform an appropriate process according to the characteristics and the capabilities of the detected NFC tag in a case in which the NFC tag is detected.

In addition, in a case in which a power transmission-allowed NFC tag is detected, the TX according to this embodiment does not include this NFC tag for counting the number of detections and notifies the RX of this as the NFC tag detection information. In accordance with this, even in a case in which a power transmission-allowed NFC tag is present on the TX, unnecessary execution of the NFC tag detecting process in the RX can be suppressed.

### [Second Embodiment]

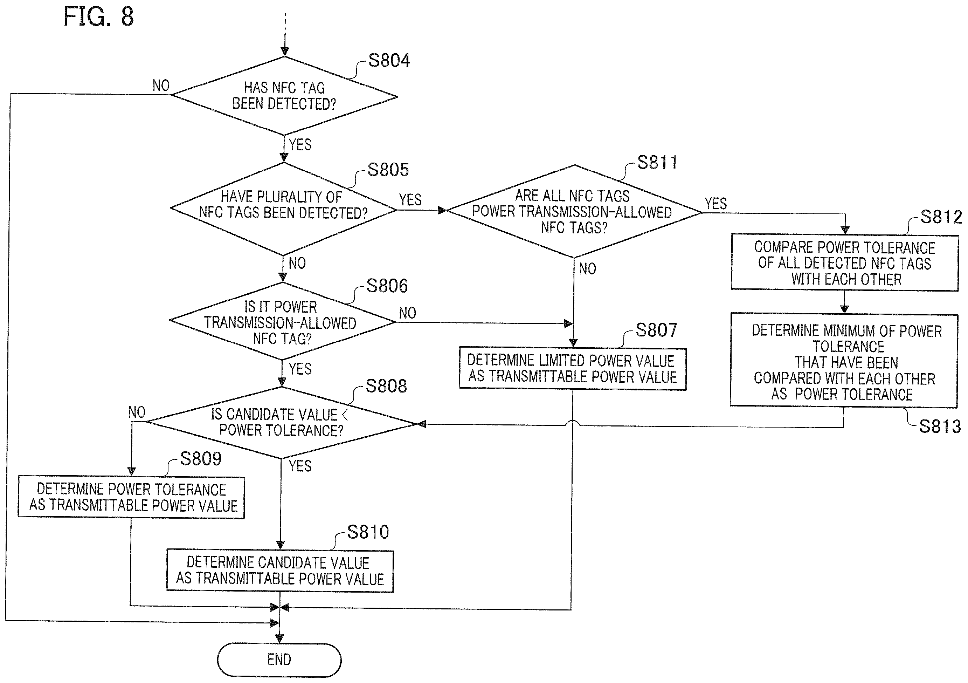

Next, a second embodiment is described. In this embodiment, description of configurations and processes that are similar to those of the first embodiment described above will be omitted. FIG. 8 is a flowchart illustrating a transmittable power value determining process executed in S406 when a TX detects a plurality of NFC tags in an NFC tag detecting process of S401. In this process, a control unit 301 mainly functions as a determination means determining a transmittable power value. The transmittable power value is power information transmitted to an RX in a negotiation with the RX in a Negotiation phase.

In FIG. 8, processes from the start of the process to S804 are similar to the processes of S601 and S604, and thus description thereof will be omitted. In FIG. 8, illustration of processes similar to those of S601 and S603 is omitted.

In S805, the TX judges whether or not a plurality of NFC tags have been detected in the NFC tag detecting process of S401. In a case in which a plurality of NFC tags have been detected (Yes in S805), the TX causes the process to proceed to S811. On the other hand, in a case in which a plurality of NFC tags have not been detected, in other words, in a case in which one NFC tag has been detected (No in S805), the TX causes the process to proceed to S806. In this embodiment, in judgment of S805, it is assumed that a plurality of NFC tags including an NFC tag A of which an power tolerance is 10 watts and an NFC tag B of which an power tolerance is 15 watts have been detected. The NFC tag A is an NFC tag of Type-A, and the NFC tag B is an NFC tag of Type-B. "A plurality of NFC tags" are not limited to a case in which NFCs of a plurality of tag types are detected in this way, and a case in which a plurality of NFC tags of the same type are detected is also considered. In such a case, a reception device includes an NFC communication unit that can individually detect a plurality of NFC tags of the same type.

In S811, the TX judges whether or not all the detected NFC tags are power transmission-allowed NFC tags in S805. In a case in which all the detected NFC tags are power transmission-allowed NFC tags (Yes in S811), the TX causes the process to proceed to S812. On the other hand, in a case in which at least one detected NFC tag is not a power transmission-allowed NFC tag (No in S811), the TX causes the process to proceed to S807.

In S812, the TX compares power tolerances of all the detected NFC tags with each other. In this embodiment, 10 watts of the power tolerance of the NFC tag A and 15 watts of the power tolerance of the NFC tag B are compared with each other, and the process is caused to proceed to S813.

In S813, as a result of the comparison of S812, the TX determines a minimal power tolerance (a minimum value) as an power tolerance of all the NFC tags detected in S805. In this embodiment, since 10 watts of the power tolerance of the NFC tag A is a minimum, the power tolerance is determined as 10 watts. The processes from S806 to S810 are similar to the processes from S606 to S610.

### <Process of Entire System>

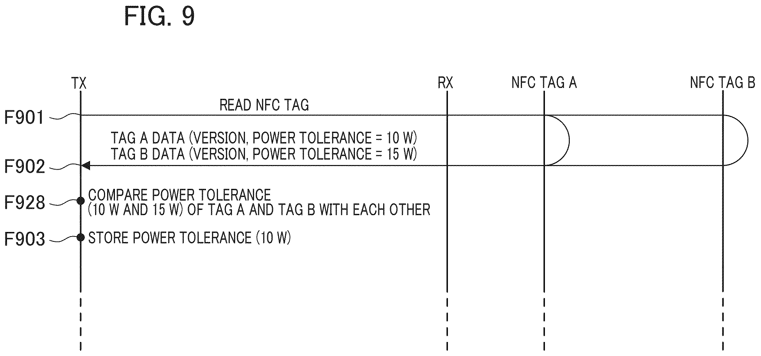

Next, an operation sequence of a case in which processes illustrated in FIG. 8 are executed in this embodiment is described with reference to FIG. 9. An initial state is assumed to be a state in which the RX is not placed in the TX. In addition, an NFC tag allowed to perform power transmission is built or mounted into the TX, or an NFC tag is arranged in the vicinity of the TX, and the placed RX can read data of this NFC tag. In this embodiment, the NFC tag A and the NFC tag B described above are arranged in the vicinity of the TX, and the power tolerance of the NFC tag A and B are respectively 10 watts and 15 watts. Similar to the first embodiment, the transmittable power value of the TX = 12 watts (the potential load power value = 15 watts), and the receivable power value of the RX = 15 watts.

The TX transmits an Analog Ping from the power transmission coil 305 and waits for placement of the RX and executes the NFC tag detecting process. At this time, although the TX detects the attached NFC tag, the detected NFC tag is a power transmission-allowed NFC tag and thus is not counted in the number of detections. Subsequently, when the placement of the RX is detected, the TX exchanges the identification information and the capability information and then starts communication of the Negotiation phase. When the capability information notification request is received from the RX, the power tolerance (a minimum) is smaller than the potential load power value of the TX, and thus the TX stores the power tolerance as transmittable power value of the capability information and transmits the capability information to the RX. In addition, when an NFC tag detection information notification request is received from the RX, the TX stores information representing "The NFC tag detecting function is included, the execution of NFC tag detection is completed, and there is no detection of the NFC tag (= the number of detections is zero)" in the NFC tag detection information and transmits the NFC tag detection information to the RX. Since the execution of the NFC tag detection is completed in the TX, and there is no detected NFC tag, the RX that has received this NFC tag detection information judges that the NFC tag detecting process is not required in its own RX and continues the communication of the Negotiation phase.

When the NFC tag detecting process starts (S401), the TX, first, resets the number of detections (S501). In F901, the TX executes an NFC tag detecting process, that is, reading of an NFC tag (S502) and acquires predetermined data indicating a power transmission-allowed NFC tag from the NFC tag A and the NFC tag B in F902 (Yes in S503, and Yes in S504). In this embodiment, although both the NFC tag A and the NFC tag B are described as power transmission-allowed NFC tags, in a case in which one thereof is not a power transmission-allowed NFC tag, a limited power value is determined as the transmittable power value, and the transmittable power value determining process is ended.

In F902, the RX that has detected a plurality of NFC tags performs comparison of power tolerances from predetermined data of each of the acquired NFC tags (F928). In this embodiment, in F928, the power tolerance of the NFC tag A = 10 watts and the power tolerance of the NFC tag B = 15 watts are compared with each other. The TX determines the power tolerance of the NFC tag A = 10 watts to be a minimum power tolerance of all the detected NFC tags and stores the minimum power tolerance (F903). Together with the minimum power tolerance, as predetermined information included in predetermined data, the TX may store the version of the Qi standard of the WPC standard, information representing an NFC version to which this NFC tag corresponds, and the version of the protection function.

Processes after F903 are similar to the processes from F704 to F727, and thus description thereof will be omitted, and illustration is omitted in FIG. 9.

According to the operation described above, in a case in which a plurality of power transmission-allowed NFC tags are detected, the TX according to this embodiment performs comparison of power tolerances of the NFC tags and determines a minimum power tolerance as the power tolerances of all the detected NFC tags. In accordance with this, in a case in which a plurality of power transmission-allowed NFC tags are detected, destruction and heat generation of the NFC tags according to power transmission exceeding the minimum power tolerance can be suppressed. In other words, in a case in which a plurality of power transmission-allowed NFC tags are detected, the power transmission device according to this embodiment can perform an appropriate process for all the detected NFC tags.

### [Other Embodiments]

In this embodiment, although a version and an power tolerance are included in the data stored in the power transmission-allowed NFC tags as predetermined information, such information may not be included. At this time, the transmittable power value can be determined as the power tolerance = the limited power value. In accordance with this, even in a case in which the power tolerance of the NFC tag cannot be acquired, power transmission/reception can be continued while suppressing destruction and heat generation of the NFC tag, and a safer wireless power transmission system having higher efficiency can be realized.

In addition, in a case in which the power tolerance is not included as predetermined information stored in the NFC tag, the TX can determine the transmittable power value on the basis of other information as predetermined information. The other information, as described above is the version of the Qi standard under the WPC standard, information representing which NFC version this NFC tag corresponds, the version of the protection function, and the like.

In this embodiment, although the power tolerance included as the predetermined data in the NFC tag is assumed to be an integer, it may be information representing a range of power values stored in advance (for example, 0x01 = 5 watts, and 0x10 = 10 watts) or the like. At this time, the transmittable power value can be determined as the power tolerance = a power value within the range. In accordance with this, also in a case in which the power tolerance is not an integer, power transmission/reception can be continued while suppressing destruction and heat generation of the NFC tag, and thus a safer wireless power transmission system having higher efficiency can be realized.

In the embodiment described above, although the NFC tag using wireless communication defined in the NFC standard as a wireless communication tag has been described as an example, the wireless communication tag may be a general radio frequency identifier tag or the like other than that. In such a case, the NFC tag is substituted with an IC tag/card, an RF tag/card, or the like.

A part of the configuration (the entire configuration depending on the situations) according to the embodiment described above may be substituted with another configuration achieving the same function or may be omitted, and another configuration may be added. In addition, the configuration is not limited to the WPC standard, and can be applied to various standards.

The power transmission device and the power reception device, for example, may be an image input device such as an imaging device (a still camera, a video camera, or the like) or a scanner or may be an image output device such as a printer, a copier, a projector or the like. In addition, they may also be storage devices such as a hard disk device, a memory device, and the like or may be information processing devices such as personal computers (PC), smartphones, tablet device, and the like.

The power reception device according to the present disclosure may be an information terminal device. For example, the information terminal device includes a display unit (display), to which power received from a power reception antenna is supplied, displaying information to a user. The power received from the power reception antenna is accumulated in an accumulation unit (battery), and power is supplied from the battery to the display unit. **In** this case, the power reception device may have a communication unit that communicates with other devices different from the power transmission device. The communication unit may correspond to communication standards such as NFC communication, the 5th generation mobile communication system (5G), or the like.

The power reception device according to the present disclosure may also be a vehicle such as an automobile or the like. For example, the automobile, which is the power reception device, may receive electric power from a charger (a power transmission device) through a power transmission antenna installed in a parking lot. **In** addition, the automobile, which is the power reception device, may receive electric power from a charger (a power transmission device) through a power transmission antenna embedded in a road. Such an automobile supplies the received power to a battery. The electric power of the battery may be supplied to a drive unit (a motor or an electrically driven unit) that drives wheels or may be used for driving sensors for driving assistance or a communication unit that communicates with external devices. **In** other words, in this case, the power reception device may have not only the wheels but also a battery, a motor or sensors driven by the received power, and a communication unit that communicates with devices other than the power transmission device. Furthermore, the power reception device may have an accommodation unit that houses people. For example, as the sensors, there are a sensor used for measuring an inter-vehicle distance and a distance to other obstacles and the like. The communication unit, for example, may correspond to a Global Positioning System (or a Global Positioning Satellite) (GPS). In addition, the communication unit may be compliant with communication standards such as the fifth-generation mobile communication system (5G) or the like. Moreover, the vehicle may also be a bicycle or a motorcycle.

The power reception device according to the present disclosure may also be an electric tool, a home appliance, or the like. These devices, which are power reception devices, may have not only a battery but also a motor driven by the reception power stored in the battery. In addition, these devices may have a notification means that gives a notification of the remaining battery level or the like. Furthermore, these devices may have a communication unit that communicates with other devices different from the power transmission device. The communication unit may be compliant with communication standards such as NFC, the fifth-generation mobile communication system (5G), or the like.

The power transmission device according to the present disclosure may also be an in-vehicle charger that transmits power to mobile information terminal devices such as smartphones, tablets, and the like that supports wireless power transmission inside an automobile. Such an in-vehicle charger may be installed anywhere inside the automobile. For example, the in-vehicle charger may be installed in the console of the automobile, on the instrument panel (dashboard), at a position between passenger seats, on the ceiling, or on the door. However, it is preferable that the in-vehicle charger should not be installed at locations that would interfere with driving. While the power transmission device has been described as an example of an in-vehicle charger, such a charger is not limited to installation in an automobile and may also be installed in other transportation vehicles such as trains, aircraft, ships, or the like. In this case, the charger may also be installed at a position between passenger seats, on the ceiling, or on the door.

In addition, a vehicle such as an automobile or the like equipped with an in-vehicle charger may also be the power transmission device. In this case, the power transmission device has wheels and a battery and supplies electric power to the power reception device using a power transmission circuit unit or a power transmission antenna using the electric power of the battery.

The present disclosure can also be realized by supplying a program that realizes one or more functions of the above-described embodiments to a system or device through a network or a storage medium and having one or more processors of a computer in the system or the device read and execute the program. Furthermore, it can also be realized by a circuit (for example, an ASIC) that realizes one or more functions.

In addition, a part of the process described with reference to the flowcharts in the present disclosure may be realized by hardware. For example, by using a predetermined compiler, dedicated circuits may be automatically generated on an FPGA from a program for realizing each step. Similar to the FPGA, a gate array circuit may be formed to realize the process by hardware.

### (Cross-reference to Related Applications)

Priority is claimed on Japanese Patent Application No. 2023-057095, filed March 31, 2023. In addition, priority is claimed on Japanese Patent Application No. 2023-138772, filed August 29, 2023. The entire contents of such Japanese patent applications are incorporated herein by reference.

As described above, while the present disclosure has been explained in detail on the basis of preferred embodiments, the present disclosure is not limited to the embodiments described above, and various modifications may be made on the basis of the spirit of the present disclosure, and such modifications are not excluded from the scope of the present disclosure.

## Claims

1. A power transmission device comprising:
a detection means configured to perform detection of a Near Field Communication (NFC) tag;
a negotiation means configured to negotiate with a power reception device; and
a determination means configured to determine power information representing power that is negotiable on the basis of predetermined information acquired from the NFC tag.

2. The power transmission device according to claim 1,
wherein the predetermined information includes information indicating whether or not the NFC tag detected by the detection means is a power transmission-allowed NFC tag.

3. The power transmission device according to claim 2,
wherein the predetermined information includes a power value with which power transmission is allowed by the NFC tag.

4. The power transmission device according to any one of claims 1 to 3,
wherein the determination means determines the power information on the basis of the predetermined information and a potential load power that the power transmission device has.

5. The power transmission device according to claim 2,
wherein, in a case in which the NFC tag detected by the detection means is not a power transmission-allowed NFC tag, the determination means determines power information of power of a predetermined value or less.

6. The power transmission device according to claim 1, further comprising a counting means configured to count the number of NFC tags detected by the detection means,
wherein, in a case in which the detected NFC tags are power transmission-allowed NFC tags, the counting means sets a count value such that the power transmission-allowed NFC tags are not counted in the number of detections.

7. The power transmission device according to claim 1,
wherein the predetermined information is at least one of a power value allowed by the NFC tag, a version of a Qi standard in the Wireless Power Consortium standard, information representing an NFC version to which the NFC tag corresponds, and a version of a protection function.

8. The power transmission device according to claim 7,
wherein the predetermined information is stored as data in a form of an NFC Data Exchange Format of the NFC forum standard.

9. The power transmission device according to claim 7,
wherein the detection means performs detection using a reader/writer function of the NFC Forum standard.

10. The power reception device according to claim 1,
wherein, in a case in which the detection means detects a plurality of NFC tags and each of all the plurality of NFC tags is an power transmission-allowed NFC tag, the determination means compares the predetermined information of the plurality of NFC tags with each other and determines the power information on the basis of a comparison result.

11. The power reception device according to claim 10,
wherein the predetermined information is a power value allowed by each of the NFC tags, and
wherein the determination means determines a minimum value of power values allowed by the plurality of NFC tags as the power information.

12. The power transmission device according to claim 1,
wherein, in a case in which the detection means detects a plurality of NFC tags, and at least one of the plurality of NFC tags is not a power transmission-allowed NFC tag, the determination means determines the power information of power equal to or less than a predetermined value.

13. The power transmission device according to claim 5 or 12,
wherein the predetermined value is 5 watts.

14. A power reception device comprising:
a power reception means configured to wirelessly receive a power; and
a negotiation means configured to perform negotiation with a power transmission device that performs detection of a Near Field Communication (NFC) tag and determines power information representing power that is negotiable with the power reception device on the basis of predetermined information acquired from the NFC tag.

15. A method executed by a power transmission device, the method comprising:
performing detection of a Near Field Communication (NFC) tag;
negotiating with a power reception device; and
determining power information representing power that is negotiable on the basis of predetermined information acquired from the NFC tag.

16. A storage medium storing a program causing a power transmission device to execute:
performing detection of a Near Field Communication (NFC) tag;
negotiating with a power reception device; and
determining power information representing power that is negotiable on the basis of predetermined information acquired from the NFC tag.
